# EUROPEAN PATENT APPLICATION

(11) **EP 4 822 925 A1**
(43) Date of publication of application: **14.10.2026**
(21) Application number: 23960801.1
(22) Date of filing: 07.12.2023
(51) Int. Cl.: H02G 5/06, H02B 13/045

(54) **GAS-INSULATED SWITCHGEAR**

(71) Applicant: Mitsubishi Electric Corporation, Tokyo 100-8310 (JP)
(72) Inventor: KAGAWA, Koichi, Tokyo 100-8310 (JP); MORI, Takahiro, Tokyo 100-8310 (JP); MATSUNAGA, Toshihiro, Tokyo 100-8310 (JP)
(74) Representative: Witte, Weller & Partner Patentanwälte mbB
(86) International application number: PCT/JP2023/043759
(87) International publication number: WO 2025/120788

(57) **Abstract**

Provided is a gas-insulated switchgear that enables a necessary insulation distance to be ensured between a tank and a switch while ensuring a space for tightening work for flanges. A gas-insulated switchgear according to the present disclosure includes a switch and a plurality of tanks in each of which the switch and insulation gas are stored and which have flanges at openings. Among the plurality of tanks, the flange of each tank is attached to the flange of another tank with the respective flanges tightened by bolts. At least one of the plurality of tanks has an inner diameter that becomes smaller as approaching the opening.

## Description

### TECHNICAL FIELD

The present disclosure relates to a connection structure for a plurality of tanks of a gas-insulated switchgear.

### BACKGROUND ART

A gas-insulated switchgear is configured such that switches such as a circuit breaker, a disconnector, and a grounding switch are stored in tanks with insulation gas sealed therein. In the gas-insulated switchgear, dry air, SF6, or the like is sealed in the tanks, whereby insulation performances of the switches can be improved. With the gas-insulated switchgear having the above configuration, distances (insulation distances) needed for insulation between the grounded tanks and the switches can be shortened, whereby the apparatus can be downsized.

In such a gas-insulated switchgear, a plurality of tanks are attached, and switches are provided inside the plurality of connected tanks. Patent Document 1 discloses a configuration in which flanges provided to openings of a plurality of tanks are tightened by bolts or the like, thereby connecting the plurality of tanks.

### CITATION LIST

### PATENT DOCUMENT

Patent Document 1: Japanese Laid-Open Patent Publication No. 2014-003755

### SUMMARY OF THE INVENTION

### PROBLEM TO BE SOLVED BY THE INVENTION

However, in a case of attaching a plurality of tanks, a space for performing tightening work is needed around the flanges where bolts or the like are present. For the tightening work, a space over the outer diameters of the flanges is needed, and if the space for the tightening work is ensured, the outer shapes of the tanks are constrained. Thus, when a switch is stored in the tank, in a case where the dimensions of a space where the gas-insulated switchgear is installed are constrained, it is difficult to ensure a necessary insulation distance between the tank and the switch.

The present disclosure has been made to solve the above problem, and an object of the present disclosure is to provide a gas-insulated switchgear that enables a necessary insulation distance to be ensured between a tank and a switch while ensuring a space for tightening work for flanges.

### MEANS TO SOLVE THE PROBLEM

A gas-insulated switchgear according to the present disclosure includes: a switch; and a plurality of tanks in each of which the switch and insulation gas are stored and which have flanges at openings. Among the plurality of tanks, the flange of each tank is attached to the flange of another tank with the respective flanges tightened by bolts. At least one of the plurality of tanks has an inner diameter that becomes smaller as approaching the opening.

### EFFECT OF THE INVENTION

In the gas-insulated switchgear according to the present disclosure, since the inner diameter of the tank becomes smaller as approaching the opening, a space for tightening work for the flange can be ensured while a necessary insulation distance between the tank and the switch can be ensured.

### BRIEF DESCRIPTION OF THE DRAWINGS

[FIG. 1] FIG. 1 is a perspective view showing a gas-insulated switchgear according to embodiment 1 of the present disclosure.
[FIG. 2] FIG. 2 is a sectional view showing a connection part between tanks in the gas-insulated switchgear according to embodiment 1 of the present disclosure.
[FIG. 3] FIG. 3 is a sectional view showing the magnitude relationship between the tank and a flange in the gas-insulated switchgear according to embodiment 1 of the present disclosure.
[FIG. 4] FIG. 4 is a sectional view showing a connection part between tanks in the gas-insulated switchgear according to embodiment 2 of the present disclosure.
[FIG. 5] FIG. 5 is a sectional view showing a connection part between tanks in a gas-insulated switchgear according to embodiment 3 of the present disclosure.

### DESCRIPTION OF EMBODIMENTS

Hereinafter, a gas-insulated switchgear according to embodiment 1 of the present disclosure will be described with reference to the drawings.

### Embodiment 1

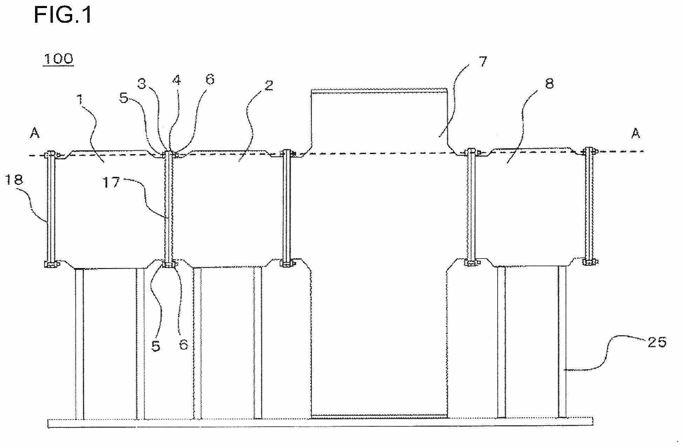

FIG. 1 is a perspective view showing a configuration of the gas-insulated switchgear according to embodiment 1 of the present disclosure. A gas-insulated switchgear 100 according to embodiment 1 of the present disclosure includes switches and a plurality of tanks. In FIG. 1, the switches are not shown. In a tank 1, a tank 2, a tank 7, and a tank 8, the switches and insulation gas are stored, and flanges are provided to openings of the tanks. As shown in FIG. 1, the plurality of tanks are connected via the flanges, and the tanks are supported by support members 25. The plurality of tanks are grounded, and the switches are provided in the tanks while taking, into consideration, insulation distances which are distances needed for insulating the grounded tanks and the switches from each other.

As shown in FIG. 1, lids 18 are provided at ends of the tank 1 and the tank 8 located at ends of the gas-insulated switchgear 100, and the flanges of the tanks and the lids 18 are tightened together by bolts or the like. The configuration of the gas-insulated switchgear 100 shown in FIG. 1 is merely an example, and the order in which the tanks are arranged or the number of the tanks may be changed as appropriate to configure the gas-insulated switchgear 100.

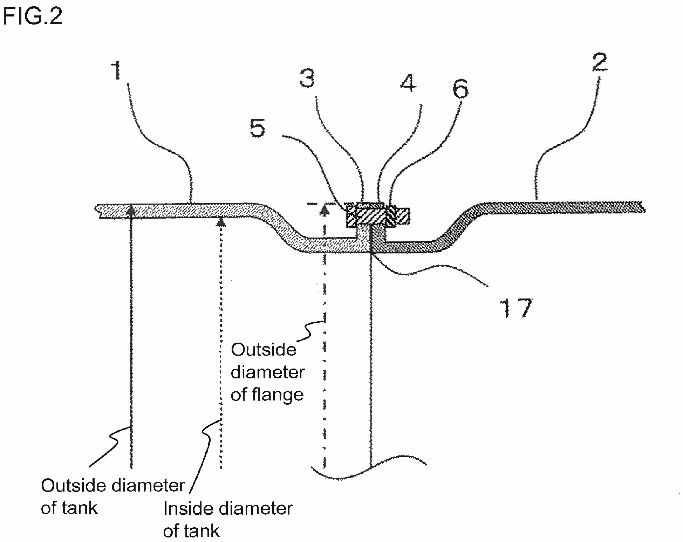

FIG. 2 is a sectional view showing a connection part between the tanks in the gas-insulated switchgear according to embodiment 1 of the present disclosure. Here, FIG. 2 is a sectional view along line A-A in FIG. 1, and shows the connection part between the tank 1 and the tank 2. Hereinafter, the connection part between the tank 1 and the tank 2 among the plurality of tanks in the gas-insulated switchgear 100 according to embodiment 1 of the present disclosure will be described as an example. As shown in FIG. 2, a flange 3 is provided to the tank 1, and a flange 4 is provided to the tank 2. The flange 3 and the flange 4 provided to openings 17 are tightened together by bolts 5 and nuts 6, whereby the tank 1 and the tank 2 are connected. In FIG. 2, the tank 1 and the tank 2 have cylindrical shapes, and the flange 3 and the flange 4 have round shapes. The numbers of the bolts 5 and the nuts 6 to be provided are sufficient numbers for tightening the flange 3 and the flange 4 in the circumferential direction of the tank 1 and the tank 2.

As shown in FIG. 2, the inner diameter of the tank 1 of the gas-insulated switchgear 100 according to embodiment 1 of the present disclosure becomes smaller as approaching the opening 17 provided with the flange 3. Since the inner diameter of the tank 1 becomes smaller as approaching the opening 17, the outer wall surface of the tank 1 of the gas-insulated switchgear according to embodiment 1 of the present disclosure has a taper shape sloping so as to descend toward the flange 3. The tank 2 has the same shape as the tank 1, and the same slope is formed also between the outer wall surface of the tank 2 and the flange 4. Since such slopes are formed, height differences are formed between the wall surface of the tank 1 and the flange 3 and between the wall surface of the tank 2 and the flange 4, so that a space for performing tightening work with the bolts 5 and the nuts 6 is obtained around the flange 3 and the flange 4. Here, it suffices that the space for performing tightening work has such a size that the bolt 5 and the nut 6 can be provided and work can be performed using tools such as a wrench. Thus, in the gas-insulated switchgear 100 according to embodiment 1 of the present disclosure, it becomes unnecessary to ensure a space over the outer diameters of the flange 3 and the flange 4 around the flanges in performing tightening work for the flange 3 and the flange 4, so that the dimensions of the tank 1 and the tank 2 are not constrained by the outer diameters of the flanges. Further, in the gas-insulated switchgear 100 according to embodiment 1 of the present disclosure, since the dimensions of the tanks are not constrained by the outer diameters of the flanges, the spaces inside the tanks can be made large, so that the insulation distances needed for the switches can be sufficiently ensured.

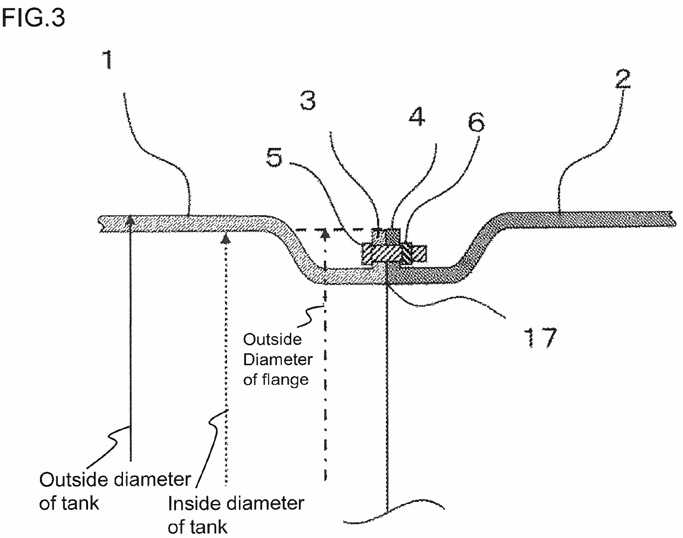

FIG. 3 is a sectional view showing the magnitude relationship between the tank and the flange in the gas-insulated switchgear according to embodiment 1 of the present disclosure. Since the tank 1 and the tank 2 have the same shape, the tank 1 will be described as an example below. In FIG. 2, the outer diameter of the tank 1 is the same as the outer diameter of the flange 3, whereas in FIG. 3, the gas-insulated switchgear 100 according to embodiment 1 of the present disclosure is configured such that the outer diameter of the flange 3 is slightly smaller than the outer diameter of the tank 1. Also in such a case, the outer wall surface of the tank 1 has a shape sloping so as to descend toward the flange 3. Thus, the tank 1 in the gas-insulated switchgear 100 according to embodiment 1 of the present disclosure is formed so as to allow tightening work to be performed with the bolts 5 and the nuts 6 around the flange 3 while ensuring insulation distances needed between the tank 1 and the switches.

In FIG. 3, the case where the outer diameter of the flange 3 is slightly smaller than the outer diameter of the tank 1 has been described. However, the outer diameter of the flange 3 may be slightly larger than the outer diameter of the tank 1. That is, the gas-insulated switchgear 100 according to embodiment 1 of the present disclosure may be formed such that the outer diameter of the flange 3 is approximately equal to the outer diameter of the tank 1. In the present disclosure, the outer diameters approximately equal to each other are such outer diameters that a space for tightening work for the flange 3 is ensured at the connection part of the tank and an insulation distance needed between the tank 1 and the switch is ensured in the tank 1, and mean that the outer diameter of the tank 1 and the outer diameter of the flange 3 are the same or substantially the same. In the above description, only the relationship between the outer diameter of the tank 1 and the outer diameter of the flange 3 has been described, but other tanks in the gas-insulated switchgear 100 of the present disclosure may have such a relationship.

As shown in FIG. 2 and FIG. 3, the tank 1 and the tank 2 of the gas-insulated switchgear 100 according to embodiment 1 of the present disclosure have inner parts sloped in arc shapes. Here, being sloped in an arc shape means that the inner sides of the tank 1 and the tank 2 are not angled. When the inner parts of the tank 1 and the tank 2 are angled, a ground fault with the switches occurs from the angled parts. When a ground fault occurs between the switch and the tank in the gas-insulated switchgear 100, a sufficient insulation distance is not obtained between the tank and the switch, resulting in loss of the function of the gas-insulated switchgear 100. The gas-insulated switchgear 100 according to embodiment 1 of the present disclosure is effective also for such a problem, that is, since the plurality of tanks have inner parts sloped in arc shapes, a ground fault can be prevented and a sufficient insulation distance can be ensured between the tank and the switch.

As described above, the gas-insulated switchgear 100 according to embodiment 1 of the present disclosure includes a switch and a plurality of tanks in each of which the switch and insulation gas are stored and which have flanges at openings 17. Among the plurality of tanks, the flange of each tank is attached to the flange of another tank with the respective flanges tightened by bolts, and at least one of the plurality of tanks has an inner diameter that becomes smaller as approaching the opening 17.

In the gas-insulated switchgear 100 according to embodiment 1 of the present disclosure, since the inner diameter of at least one of the plurality of tanks becomes smaller as approaching the opening 17, a space for tightening work for the flanges can be ensured while the insulation distance needed between the tank and the switch can be ensured.

In the gas-insulated switchgear 100 according to embodiment 1 of the present disclosure, the outer diameter of the tank is approximately the same as the outer diameter of the flange. Thus, the outer diameter of the tank can be set at a maximum size with respect to the size of the gas-insulated switchgear 100, and the space in the tank can also be ensured in a maximum size.

In the gas-insulated switchgear 100 according to embodiment 1 of the present disclosure, only the case where the tanks to be connected have the same shape has been described. However, among the tanks to be connected, only some tanks may have inner diameters that become smaller as approaching the openings 17. Also in such a case, the space for performing tightening work can be ensured while the insulation distance needed between the tank and the switch can be ensured.

### Embodiment 2

In embodiment 2, the same components as those in embodiment 1 of the present disclosure are denoted by the same reference characters, and the description of the same or corresponding parts is omitted. Hereinafter, a gas-insulated switchgear according to embodiment 2 will be described with reference to the drawings.

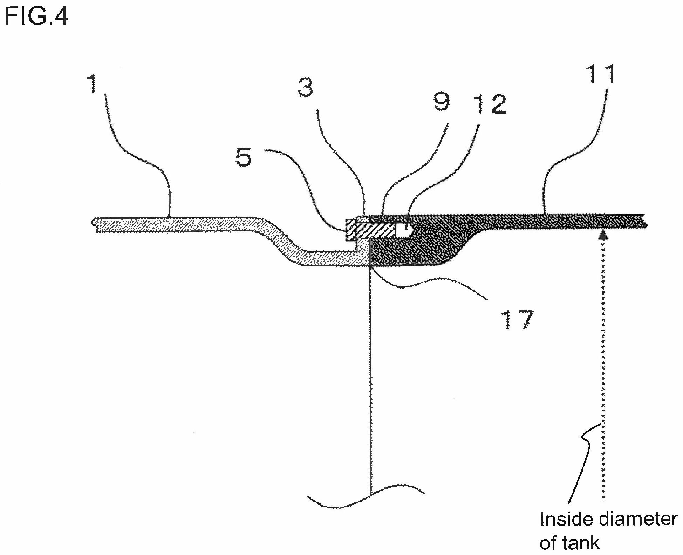

FIG. 4 is a sectional view showing a connection part between tanks in the gas-insulated switchgear according to embodiment 2 of the present disclosure. Hereinafter, a connection part between the tank 1 and a tank 11 among a plurality of tanks in the gas-insulated switchgear according to embodiment 2 of the present disclosure will be described as an example. In embodiment 1, the flange 3 and the flange 4 are tightened together by the bolts 5 and the nuts 6, whereby the tank 1 and the tank 2 are connected. On the other hand, in the gas-insulated switchgear according to embodiment 2 of the present disclosure, the configuration of embodiment 1 is provided and in addition, the tank 11 has a screw hole 12 in a flange 9. With this configuration, as shown in FIG. 4, the flange 9 is attached to the flange 3 of the tank 1 by the bolt 5 and the screw hole 12. Since the tank 11 has the flange 9 having the screw hole 12, the side surface of the tank 11 becomes thicker as approaching the opening 17.

In the gas-insulated switchgear according to embodiment 2 of the present disclosure, since the same configuration as in embodiment 1 is provided, a space for tightening work for the flange can be ensured while the insulation distance needed for the switch can be ensured. Further, although the tanks are connected to each other by the bolts 5 and the nuts 6 in embodiment 1, only the bolts 5 are used in the gas-insulated switchgear according to embodiment 2 of the present disclosure. Thus, in the gas-insulated switchgear according to embodiment 2 of the present disclosure, the number of components needed for connecting the tanks can be decreased as compared to embodiment 1.

In the gas-insulated switchgear according to embodiment 2 of the present disclosure, the tank 1 and the tank 11 can be connected merely by inserting the bolt 5 into the screw hole 12 from the tank 1 side and tightening the bolt 5. Thus, the gas-insulated switchgear according to embodiment 2 of the present disclosure provides an effect of facilitating work for connecting the tanks.

In the gas-insulated switchgear according to embodiment 2 of the present disclosure, at least one of the plurality of tanks may be attached to another tank by the bolt 5 and the nut 6, and at least another one of the plurality of tanks may be attached to another tank by the bolt 5 and the screw hole 12. With this configuration, in the gas-insulated switchgear according to embodiment 2 of the present disclosure, the number of components needed for connecting the tanks can be decreased for some of the plurality of tanks, and connection work is facilitated for some of the plurality of tanks.

In the structure as in the gas-insulated switchgear according to embodiment 2 of the present disclosure, if the bolt 5 and the screw hole 12 are not electrically connected, the bolt 5 serves as a stray electrode. Here, the stray electrode is produced due to induced voltage from charged parts inside and outside the tank. When the stray electrode is present, a surge occurs with a grounded outer surface, so that a ground fault and a short-circuit occur at a main circuit inside the tank and components and devices are damaged outside the tank. In this regard, in the gas-insulated switchgear according to embodiment 2 of the present disclosure, the screw hole 12 has no coating, so that the bolt 5 and the screw hole 12 are electrically connected to each other. With this configuration, the thread of the bolt 5 and the non-coated part of the screw hole 12 contact with each other, so that electric contact is ensured. Thus, in the gas-insulated switchgear according to embodiment 2 of the present disclosure, the bolt 5 can be prevented from serving as a stray electrode, and components and devices can be prevented from being damaged by a surge.

### Embodiment 3

In embodiment 3, the same components as those in embodiment 1 of the present disclosure are denoted by the same reference characters, and the description of the same or corresponding parts is omitted. Hereinafter, a gas-insulated switchgear according to embodiment 3 will be described with reference to the drawings.

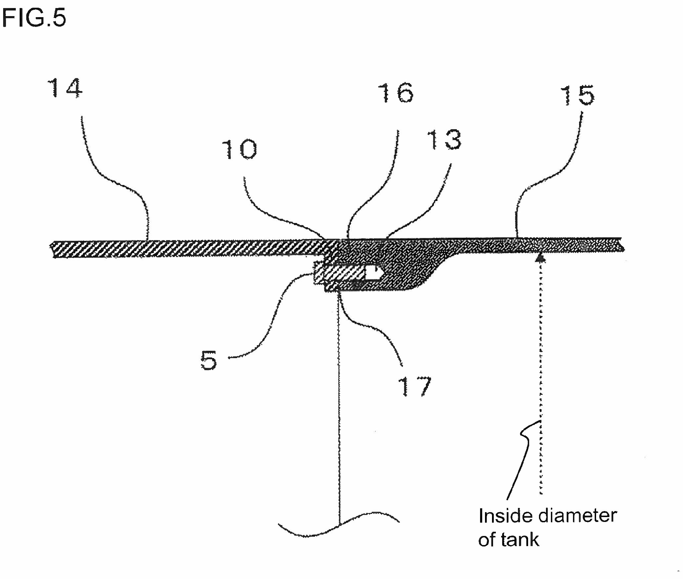

FIG. 5 is a sectional view showing a connection part between tanks in the gas-insulated switchgear according to embodiment 3 of the present disclosure. Hereinafter, a connection part between a tank 14 and a tank 15 among a plurality of tanks in the gas-insulated switchgear according to embodiment 3 of the present disclosure will be described as an example. As shown in FIG. 5, in the gas-insulated switchgear according to embodiment 3 of the present disclosure, the configuration of embodiment 1 is provided and in addition, a flange 10 is provided on the inner side of the tank 14 and a flange 16 is provided on the inner side of the tank 15. With this configuration, the bolt 5 can be inserted into a screw hole 13 from the inner side of the tank 14 in tightening work. Thus, in the gas-insulated switchgear according to embodiment 3 of the present disclosure, tightening work need not be performed on the outer side of the tank 14 and the tank 15. It is noted that the configuration of the gas-insulated switchgear according to embodiment 3 of the present disclosure is effective only in a case where there is a tolerance for electric field designing between the tanks to be connected.

As described above, in the gas-insulated switchgear according to embodiment 3 of the present disclosure, since the same configuration as in embodiment 1 is provided, a space for tightening work for the flange can be ensured while the insulation distance needed for the switch can be ensured. Further, in the gas-insulated switchgear according to embodiment 3 of the present disclosure, since the flanges are provided on the inner side of the tanks, work on the outer side of the tanks need not be performed, thus providing an effect of eliminating constraints with respect to structures present around the tanks.

In embodiments 1 to 4 of the present disclosure, the shape of the tank is a cylindrical shape and the flange has a round shape. However, as long as a strength that can withstand the pressure of the sealed insulation gas is ensured, the tank and the flange may have a substantially cylindrical shape (e.g., elliptic shape) or a rectangular shape.

In the gas-insulated switchgears according to embodiments 1 to 4 of the present disclosure, switches stored in the tanks include a circuit breaker, a disconnector, a grounding switch, and the like. The insulation gas stored in the tanks may be dry air, SF6, or the like.

The configurations described in the above embodiments are merely examples of the contents of the present disclosure, and another known configuration may be combined. The above configurations may be partially omitted or modified without deviating from the scope of the present disclosure.

### DESCRIPTION OF THE REFERENCE CHARACTERS

1, 2, 7, 8, 11, 14, 15 tank
3, 4, 9, 10, 16 flange
5 bolt
6 nut
12, 13 screw hole
17 opening
18 lid
100 gas-insulated switchgear

## Claims

1. A gas-insulated switchgear comprising:
a switch; and
a plurality of tanks in each of which the switch and insulation gas are stored and which have flanges at openings, wherein
among the plurality of tanks, the flange of each tank is attached to the flange of another tank with the respective flanges tightened by bolts, and
at least one of the plurality of tanks has an inner diameter that becomes smaller as approaching the opening.

2. The gas-insulated switchgear according to claim 1, wherein
an outer diameter of the flange is approximately equal to an outer diameter of the tank.

3. The gas-insulated switchgear according to claim 1 or 2, wherein
the plurality of tanks have inner surfaces sloped in arc shapes.

4. The gas-insulated switchgear according to any one of claims 1 to 3, wherein
the tank has a screw hole in the flange, and the flange is attached to the flange of another tank by the bolt and the screw hole.

5. The gas-insulated switchgear according to claim 4, wherein
at least one of the plurality of tanks is attached to another tank by the bolt and a nut, and at least another one of the plurality of tanks is attached to another tank by the bolt and the screw hole.

6. The gas-insulated switchgear according to claim 4 or 5, wherein
the bolt and the screw hole are electrically connected to each other.

7. The gas-insulated switchgear according to any one of claims 1 to 6, wherein
the flange is provided on an inner side of the tank.
